**Europäisches Patentamt**

**European Patent Office**

**Office européen des brevets**

(11) Veröffentlichungsnummer: **0 285 114 B1**

(12) **EUROPÄISCHE PATENTSCHRIFT**

(45) Veröffentlichungstag der Patentschrift: **04.03.92**

(21) Anmeldenummer: **88105125.4**

(22) Anmeldetag: **29.03.88**

Verbunden mit 88903221.5/0359749 (europäische Anmeldenummer/Veröffentlichungsnummer) durch Entscheidung vom 26.02.91.

(51) Int. Cl.⁵: **H04N 3/30**, H04N 3/233

(54) **Zeilenablenkschaltung für eine Bildröhre.**

(30) Priorität: **02.04.87 DE 3711173**

(43) Veröffentlichungstag der Anmeldung: **05.10.88 Patentblatt 88/40**

(45) Bekanntmachung des Hinweises auf die Patenterteilung: **04.03.92 Patentblatt 92/10**

(84) Benannte Vertragsstaaten: **AT BE CH DE ES FR GB GR IT LI LU NL SE**

(56) Entgegenhaltungen:
**EP-A- 0 055 148**
**EP-A- 0 175 409**
**EP-A- 0 200 116**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Rilly, Gerard, Dr.-Ing.**
**Panoramaweg 8**
**W-7731 Unterkirnach(DE)**

## Beschreibung

Bei einer Zeilenablenkschaltung für eine Bildröhre, z.B. für einen Fernsehempfänger oder einen Monitor, wird der Elektronenstrahl während der Hinlaufzeit einer Zeile vom linken zum rechten Bildrand abgelenkt. Darauf folgt eine Rücklaufzeit, während der der Elektronenstrahl mit hoher Geschwindigkeit zum linken Bildrand zurückkehrt. Durch die schnelle Änderung des Ablenkstroms während der Rücklaufzeit entsteht dabei eine relativ hohe Spannungsspitze an dem Zeilenendstufentransistor und der Zeilenablenkspule, die bei der Bemessung dieser Teile berücksichtigt werden muß.

Bei Fernsehsystemen mit erhöhter Auflösung, erhöhter Zeilenzahl und dementsprechend verringerter Zeilendauer (HDTV) treten zusätzliche Probleme auf. Diese bestehen in der erhöhten aufzubringenden Leistung, in einer erhöhten Rücklaufspannung am Zeilenendstufentransistor und an der Zeilenablenkspule sowie in einer erhöhten Störstrahlung.

Es ist bekannt (IEEE Transactions on Consumer Electronics Vol. CE-31, Nr. 3, August 1985, Seite 255 - 261), für derartige Systeme mit erhöhter Auflösung mit einer sogenannten symmetrischen Zeilenablenkung zu arbeiten. Das bedeutet, daß der Elektronenstrahl zum Schreiben einer Zeile vom linken zum rechten Bildrand abgelenkt und anschließend ohne einen Rücklauf vom rechten zum linken Bildrand ebenfalls zum Schreiben der nächsten Zeile mit derselben Geschwindigkeit abgelenkt wird. Dabei fehlt also der bisher verwendete schnelle Rücklauf vom rechten vom linken Bildrand und somit die störende schnelle Änderung des Ablenkstromes. Eine derartige Ablenkung hat den Vorteil, daß die Verlustleistung und die Störstrahlung der Zeilenablenkschaltung verringert werden. Bei einer derartigen symmetrischen Ablenkung hat der Zeilenablenkstrom z.B. einen dreieckförmigen Verlauf von einem negativen Wert zu einem positiven Wert während der einen Zeile und von diesem positiven Wert bis zu dem negativen Wert während der darauffolgenden Zeile. Der Ablenkstrom kann in Annäherung an diesen dreieckförmigen Verlauf nach einen sinusförmigen Verlauf haben. Sowohl bei dem dreieckförmigen Verlauf als auch bei dem sinusförmigen Verlauf des Ablenkstromes liegen die Maxima des Stromes jeweils zwischen zwei Zeilen außerhalb des Bildschirms und die Nulldurchgänge in der Zeilenmitte.

Für einen dreieckförmigen Verlauf des Ablenkstromes wird dabei über eine entsprechende Schaltung an die Ablenkspule eine rechteckförmige Spannung halber Zeilenfrequenz angelegt. Im Idealfall erzeugt diese Rechteckspannung in der Ablenkspule einen dreieckförmigen Strom, und zwar bei positiver Rechteckspannung mit positiver Steigung und bei negativer Rechteckspannung mit negativer Steigung, wobei jeweils der Nulldurchgang des Ablenkstromes in der Zeilenmitte liegt und der Ablenkstrom in den beiden Hälften der Zeilenhinlaufzeit vor und nach dem Nulldurchgang symmetrisch mit entgegengesetztem Vorzeichen verläuft.

Durch die im Weg des Ablenkstromes vorhandenen ohmschen Widerstände, insbesondere durch den unvermeidbaren ohmschen Widerstand der Ablenkspule, ist der Sollverlauf des Ablenkstromes in der Praxis nicht immer gegeben. Das bedeutet, daß der Ablenkstrom während eine Zeilendauer seinen Nulldurchgang nicht in der Mitte der Zeile hat und außerdem in den beiden Zeilenhälften unterschiedlich gekrümmten Verlauf aufweist. Dadurch entstehen bei der Bilddarstellung Fehler in der Geometrie und der Helligkeit des dargestellten Bildes.

Aus EP-A-0 200 116 sind ein Verfahren und eine entsprechende Schaltung bekannt, bei denen der Stromverlauf, bei symmetrischer Zeilenablenkung, in der Ablenkspule Korrigiert wird anhand von Korrekturwerten, die mittels Messung von Abweichungen der Position des Spots auf der Bildfläche von seiner Soll-Position ermittelt werden.

Der Erfindung liegt die Aufgabe zugrund, die beschriebene Abweichung des Stromverlaufes von dem Sollverlauf mit einfachen schaltungstechnischen Mitteln zu vermeiden.

Diese Aufgabe wird durch die im Anspruch 1 beschriebene Erfindung gelöst. Vorteilhafte Weiterbildungen der Erfindung sind in den Unteransprüchen beschrieben.

Bei der erfindungsgemäße Lösung wird also der tatsächlich fließende Ablenkstrom mittels eine Widerstandes oder die den Ablenkstrom verursachende Spannung an der Ablenkspule detektiert. Die Lösung beruht darauf, daß die Abweichungen von der beschriebenen Sollage aus diesen beiden Werten erkennbar sind. Daraus werden Stellgrößen gewonnen. Diese steuern über den Verstärker nach dem Prinzip einer Gegenkopplung oder Regelschaltung den Ablenkstrom derart, daß er den beschriebenen gewünschten Verlauf während der Zeile annimmt. Die Beeinflussung des Ablenkstromes zum Zwecke der Korrektur mittels des Verstärkers kann in Abhängigkeit vom dem Ablenkstrom, in Abhängigkeit von der an die Ablenkspule angelegten Spannung oder auch kombiniert aufgrund beider Kriterien erfolgen.

Vorzugsweise wird zusätzlich der Nulldurchgang des Ablenkstromes detektiert und aus seiner Abweichung von der Mitte der Zeile eine zusätzliche Regelspannung gewonnen, die die Verstärkung der dem Ablenkstrom proportionalen Spannung zusätzlich steuert. Dadurch können insbesondere Einflüsse auf die Nullage des Ablenkstromes durch Temperaturänderungen an der Ablenkeinheit ausgeglichen werden. Diese Regelspannung ist keine dynamische, sich während einer Zeile ändernde Regelspannung, sondern eine gleichspannungsartige, also sich langsam ändernde Regelspannung.

Die Erfindung wird in folgenden anhand der Zeichnung an einem Ausführungsbeispiel erläutert. Darin zeigen

Fig. 1    ein Ausführungsbeispiel der erfindungsgemäßen Schaltung und

Fig. 2    Kurven zur Erläuterung der Wirkungsweise.

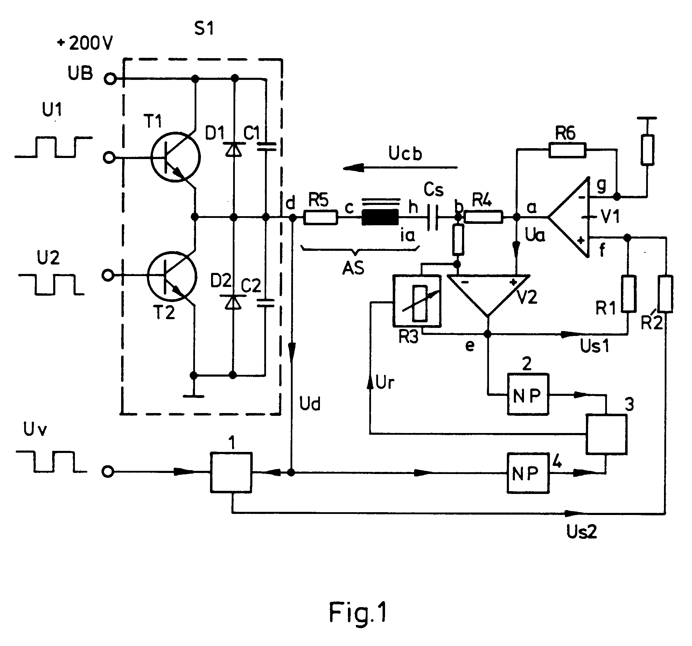

In Fig. 1 werden zwei Leistungstransistoren T1, T2 durch zwei Schaltspannungen U1, U2 im Gegentakt abwechselnd leitend gesteuert und gesperrt. Bei einer Zeilenfrequenz von 32 kHz haben die Schaltspannung U1, U2 die halbe Zeilenfrequenz, also 16 kHz, wobei jeweils eine Halbwelle der Schaltspannung von U1, U2 gleich einer Zeilendauer ist. Den Transistoren T1, T2 sind zur vorrübergehenden Stromübernahme dienende Freilaufdioden D1, D2 und Kondensatoren C1, C2 parallelgeschaltet. Die Teile T1, C1, D1, T2, C2, D2 bilden einen sogenannten Hochspannungsschalter S1, dessen Ausgang d von Zeile zu Zeile abwechselnd mit Erde und mit der Betriebsspannung UB = 200 V verbunden ist. Am Punkt d, der den Ausgang des Schalters S1 und den Eingang der Ablenkspule AS darstellt, entsteht dadurch ebenfalls eine halbzeilenfrequente Spannung Ud. R5 stellt den ohmschen Anteil der Ablenkspule AS dar. Cs ist der zur Gleichstromentkopplung und zur Tangensentzerrung dienende sogenannte Tangenkondensator. Das rechte Ende b von Cs ist nicht geerdet, sondern über den Widerstand R4 an den Ausgang a des Verstärkers V1 angeschlossen.

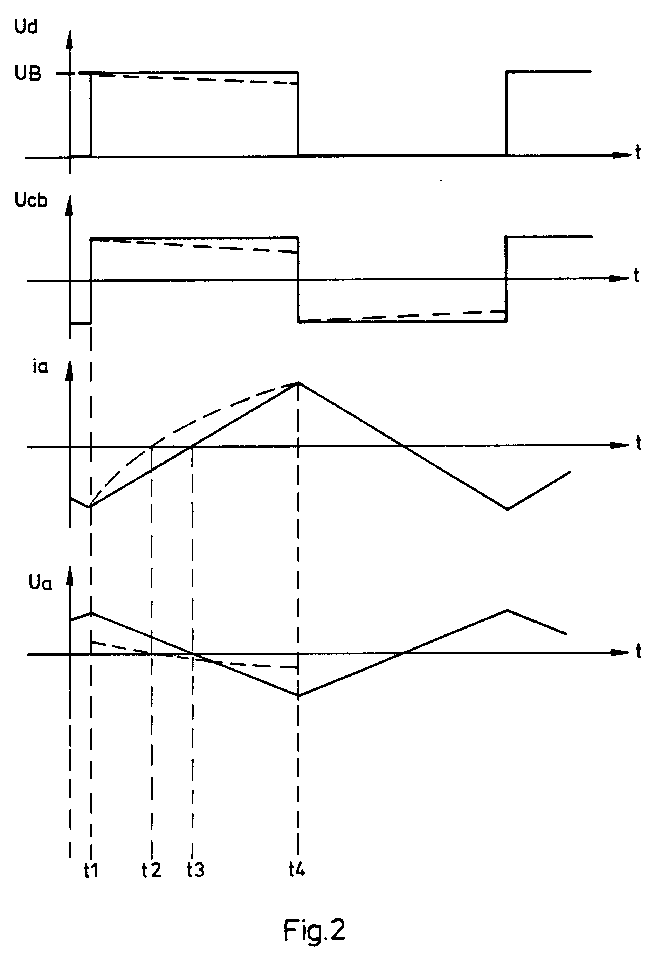

Fig. 2 zeigt die Spannungen und Ströme in Fig. 1. Während der Zeile von t1 - t4 ist jeweils der Idealverlauf durch die vollausgezogene Linie dargestellt. Die gestrichelte Linie zeigt den jeweils in der Praxis auftretenden, vom Sollverlauf abweichenden tatsächlichen Verlauf ohne Korrekturmaßnahmen. Die Spannung Ucb zwischen den Punkten c und b, die den Wert des Ablenkstromes ia bestimmt, hat den gestrichelt gezeichneten Abfall aufgrund des Spannungsabfalles über den Widerständen R4 und R5. Durch diesen Spannungsabfall entsteht der gestrichelt gezeichnete Verlauf des Stromes ia. Die soweit beschriebene Schaltung enthält jetzt drei Korrekturwege zur Erzielung des idealen Stromverlaufs von ia, die im folgenden nacheinander beschrieben werden.

**Korrektur durch den Ablenkstrom**

Die Spannung zwischen den Punkten b und a, die dem Ablenkstrom ia proportional ist, wird den Eingängen des Differenzverstärkers V2 zugeführt.

Am Punkt e entsteht somit eine dem Ablenkstrom ia proportionale Spannung. Diese gelangt als Stellgröße Us1 über den Widerstand R1 auf den Eingang f des Verstärkers V1, der über den Widerstand R6 gegengekoppelt ist und als analoger linearer Verstärker arbeitet. Die Stellgröße Us1 ändert die Spannung Ua am Punkt a entsprechend dem tatsächlich fließenden Ablenkstrom ia. Der Ablenkstrom ia hat den gewünschten Verlauf, wenn die Spannung Ucb über der Induktivität der Ablenkspule AS und dem Kondensator Cs einen exakt rechteckförmigen Verlauf hat, also jeweils während einer Zeilendauer konstant ist. Durch die im Weg des Ablenkstromes ia wirksamen ohmschen Widerstände ist diese Bedingung nicht erfüllt. Die Spannung Ua am Punkt a wird durch die Stellgröße Us1 so gesteuert, daß die Spannung Ucb exakt rechteckförmig ist, also jeweils während einer Zeilendauer einen konstanten Wert aufweist und nicht entsprechend der gestrichelten Linie abfällt. Mit dem Verstärker V1 wird also am Punkt a die Spannung Ua erzeugt. Die Spannung Ua kompensiert somit den gestrichelt dargestellten Spannungsabfall der Spannung Ucb. Es handelt sich um eine Gegenkopplung auf den Punkt a in dem Sinne, daß der Ablenkstrom ia sich selbst korrigiert. Die Stellgröße Us1 ist eine dynamische Stellgröße, die sich jeweils während einer Zeilendauer ändert. Gegebenenfalls kann im Weg der Stellgröße Us1 noch ein Impulsformer oder ein Verzerrer angeordnet sein, der den Verlauf der Stellgröße Us1 jeweils während einer Zeile im Sinne einer einwandfreien Korrektur des Ablenkstromes ändert. Der Sollverlauf des Ablenkstromes ia bedeutet, daß ia in der Mitte der Zeile seinen Nulldurchgang aufweist und in den beiden Zeilenhälften zu beiden Seiten des Nulldurchgangs symmetrisch spiegelbildlich mit entgegengesetztem Vorzeichen verläuft.

**Korrektur durch die Spannung**

Die am Punkt b stehende Spannung Ud wird der Vergleichstufe 1 zugeführt, der andererseits eine Vergleichspannung Uv mit exakt rechteckförmigem Verlauf und halber Zeilenfrequenz zugeführt wird. In der Vergleichstufe 1 wird die Abweichung zwischen Uv und Ud registriert. Daraus wird eine Stellgröße Us2 gewonnen, die den unerwünschten Abfall von Ud jeweils während einer Zeilenperiode darstellt. Ein derartiger Abfall der Spannung würde ebenfalls den Ablenkstrom ia beeinträchtigen. Die Stellgröße Us2 wirkt über den Widerstand R2 ebenfalls auf den Eingang f des Verstärkers V1 additiv zu der Stellgröße Us1 ein. Us2 ist ebenfalls in der Lage, die Spannung Ua während einer Zeilendauer so zu ändern, daß der Ablenkstrom ia während der Zeilendauer den gewünschten Verlauf aufweist. Die Stellgrößen Us1 und Us2 können je für sich oder auch wie dargestellt gleichzeitig zur Korrektur des Ablenkstromes ia dienen.

## Korrektur aufgrund des Nulldurchgangs

Die dem Ablenkstrom ia proportionale Spannung am Punkt e wird zusätzlich dem Nulldurchgangs-Detektor 2 und das Ergebnis der Zeit-Vergleichstufe 3 zugeführt. Außerdem wird die Spannung Ud dem Detektor 4 zugeführt, der die Flanken von Ud detektiert und das Ergebnis der Zeit-Vergleichstufe 2 zuführt. Der Detektor 4 spricht z.B. auf den Spannungswert $Ud = UB/2 = 100$ V an, der in der Praxis in der Mitte der Dauer der Flanke von Ud liegt. Die Steilheit dieser Flanke ist durch C1, C2 verringert. In der Stufe 3 werden die Nulldurchgänge von ia und die Impulsflanken von Ud in ihrer zeitlichen Lage zueinander verglichen. Im Zeitpunkt t1 der Flanke von Ud wird in der Stufe 3 ein Zähler gestartet, der in positiver Richtung aufwärts zählt. Im Zeitpunkt t2 oder t3 des Nulldurchgangs von ia wird der Zähler gestoppt und von t2 bzw, t3 - t4, also bis zur nächsten Flanke von Ud in entgegengesetzter Richtung gesteuert. Wenn der Nulldurchgang von ia bei t3, also in der Mitte der Zeilendauer von t1 - t4 liegt, ist das Zählergebnis bei t4 gleich null und die Regelspannung Ur ebenfalls null. Wenn durch einen Abfall in der Spannung Ud und/oder der Spannung Ucb, wie gestrichelt dargestellt, der Strom ia den gestrichelten Verlauf annimmt, ist dessen Nulldurchgang t2 gegenüber dem Soll-Nulldurchgang t3 verschoben. Von t1 - t2 wird der Zähler positiv weitergeschaltet und von t2 - t4 negativ. Da t1 - t2 kleiner ist als t2 - t4, ist das Zählergebnis negativ. Dadurch ändert sich die erzeugte Regelspannung Ur in negative Richtung. Die Regelspannung Ur steuert den steuerbaren Widerstand R3 und damit die Gegenkopplung und Verstärkung des Verstärkers V2. Dadurch ändert sich die Spannung am Punkt a in dem Sinne, daß der Strom wieder seinen Nulldurchgang im Soll-Zeitpunkt t3 einnimmt. Wenn der Nulldurchgang t2 später als t3 liegt, wird entsprechend Ur positiv und ändert den Widerstand R3 in entgegengesetzter Richtung. Die Regelung mit Ur bewirkt also, daß der Nulldurchgang von ia immer in erwünschter Weise bei t3, also in der Mitte der Zeile liegt. Wenn diese Bedingung erfüllt ist, kann davon ausgegangen werden, daß der Strom ia den gewünschten Verlauf symmetrisch zum Nulldurchgang t3 aufweist. Ur ist eine gleichspannungsartige Regelspannung, die eine langsame Regelung bewirkt. Sie dient insbesondere dazu, Abweichungen im Nulldurchgang von ia durch Temperaturänderungen, also insbesondere Änderung der Werte von R4 und R5 im Sinne einer Langzeitregelung auszugleichen. Die vollausgezogen dargestellte Spannung Ua in Fig. 2 ist die am Punkt a für die einwandfreie Korrektur des Ablenkstromes ia, d.h. für den voll ausgezogen dargestellten Verlauf wirksame Spannung. Der gestrichelt dargestellte Verlauf von Ua gilt für den Fall, daß die Kompensation von Ua nicht ausreicht und der Ablenkstrom ia den gestrichelten Verlauf einnimmt.

Bisher wurde angenommen, daß die an den Schalter S1 angelegte Betriebsspannung UB von + 200 V konstant ist. Diese Spannung kann zusätzlich amplitudenmoduliert sein, um eine Korrektur der Geometrie des Ablenkrasters zu erzielen. Wenn der Zeilenablenkstrom z.B. für eine Ost/West-Korrektur entsprechend der vertikalfrequenten Ablenkspannung moduliert sein soll, kann die Betriebsspannung UB zusätzlich durch eine vertikalfrequente Spannung amplitudenmoduliert sein. Dann wäre auch die Amplitude des Ablenkstromes ia für eine Ost/West Rasterkorrektur vertikalfrequent moduliert.

Die Spannung Ua am Punkt a, damit die an der Ablenkspule AS wirksame Spannung und damit der Ablenkstrom ia werden also aufgrund von drei Kriterien geregelt, einmal dynamisch in Abhängigkeit von ia selbst mittels der Stellgröße Us1, in Abhängigkeit von der an die Ablenkspule AS angelegte Spannung Ud ebenfalls dynamisch mittels der Stellgröße Us2 und zusätzlich statisch in Abhängigkeit von der Lage des Nulldurchgangs des Stromes ia mittels der statisch wirkenden Regelspannung Ur.

Für die in Fig. 1 dargestellten Stufen 1 - 4 können z.B. handelsübliche Schnell-Comparatoren von Typ LM2901 der Firma Motorola verwendet werden.

## Patentansprüche

1. Zeilenablenkschaltung für eine Bildröhre mit einer Ablenkspule (AS), einem im Weg des Ahlenkstroms (ia) liegenden Tangenskondensator (Cs) und symmetrischer Ablenkung, bei der der Elektronenstrahl zur Bildwiedergabe abwechselnd vom linken zum rechten und vom rechten zum linken Bildrand abgelenkt wird, **dadurch gekennzeichnet,** daß ein Ende (d) der Ablenkspule (AS) an den Ausgang (d) eines eine annähernd rechteckförmige Spannung (Ud) mit halber Zeilenfrequenz und einem Tastverhältnis 1:1 liefernden aktiven Spannungsschalters (S1) und das andere Ende (h) der Ablenkspule (AS) an den Ausgang (a) eines Verstärkers (V1) angeschlossen ist, und daß an einen Steuereingang (f) des Verstärkers (V1) eine erste, dem Strom (ia) durch die Ablenkspule (AS) proportionale Stellgröße (Us1) und/oder eine zweite, aus der Abweichung zwischen der Ausgangsspannung (Ud) des Schalters (S1) von der Rechteckform gewonnene Stellgröße (Us2) derart angelegt sind, daß der Strom (ia) durch die Ablenkspule (AS) einen linearen Verlauf und einen Nulldurchgang in der Zeilenmitte (t3) hat.

2. Schaltung nach Anspruch 1, **dadurch gekennzeichnet,** daß im Weg des Ablenkstroms (ia) ein Widerstand (R4) liegt, dessen beide Enden (b, a) an die Eingänge eines Differenzverstärkers (V2) angeschlossen sind, dessen Ausgang die erste Stellgröße (Us1) liefert.

3. Schaltung nach Anspruch 2, **dadurch gekennzeichnet,** daß eine Schaltung vorgesehen ist, die die zeitliche Lage des Nulldurchgangs (t2, t3) des Ablenkstromes (ia) relativ zu den Flanken (t1, t4) der Ausgangsspannung (Ud) des Schalters (S1) auswertet und daraus eine Regelspannung (Ur) für die Verstärkung des Differenzverstärkers (V2) ableitet.

4. Schaltung nach Anspruch 3, **dadurch gekennzeichnet,** daß bei einer Flanke (t1) der Ausgangsspannung (Ud) des Schalters (S1) ein Zähler gestartet, im Nulldurchgang (t2) des Ablenkstromes (ia) dessen Zählrichtung umgekehrt wird und das Zählergebnis bei der nächsten Flanke (t4) der Ausgangsspannung (Ud) den Wert der Regelspannung (Ur) bestimmt.

5. Schaltung nach Anspruch 1, **dadurch gekennzeichnet,** daß die an den Schalter (S1) angelegte Betriebsspannung (UB) zur Erzielung einer Geometriekorrektur des Ablenkrasters (Ost/West) amplitudenmoduliert ist.

**Claims**

1. A line sweep circuit for a picture tube with a deflection coil (AS), a tangent capacitor (Cs) lying in the path of the deflection current (ia) and symmetrical deflection, in which the electron beam for picture reproduction is deflected alternately from the left to the right and from the right to the left edge of the picture, characterised in that one end (d) of the deflection coil (AS) is connected to the output (d) of an active voltage switch (S1), which delivers an approximately square voltage (Ud) at half line frequency and a mark-to-space ratio of 1:1, and the other end (h) of the deflection coil (AS) is connected to the output (a) of an amplifier (V1), and that a first variable (Us1) proportional to the current (ia) through the deflection coil (AS) and/or a second variable (Us2) obtained from the difference between the output voltage (Ud) of the switch and the square shape are applied to a control input (f) of the amplifier (V1) such that the current (ia) through the deflection coil (AS) has a linear path and a zero axis crossing at the centre of the line (t3).

2. A circuit according to claim 1, characterised in that in the path of the deflection current (ia) there is a resistor (R4) both ends (b, a) of which are connected to the inputs of a differential amplifier (V2), the output of which supplies the first variable (Us1).

3. A circuit according to claim 2, characterised in that a circuit is provided which evaluates the time position of the zero axis crossing (t2, t3) of the deflection current (ia) relative to the flanks (t1, t4) of the output voltage (Ud) of the switch (S1) and derives from this a control voltage (Ur) for the gain of the differential amplifier (V2).

4. A circuit according to claim 3, characterised in that with a flank (t1) of the output voltage (Ud) of the switch (S1) a counter is started, its counting direction being reversed at the zero axis crossing (t2) of the deflection current (ia) and the count determines the value of the control voltage (Ur) at the next flank (t4) of the output voltage (Ud).

5. A circuit according to claim 1, characterised in that the operating voltage (UB) applied to the switch (S1) is amplitude modulated in order to achieve a geometric correction of the deflection raster (east/west).

**Revendications**

1. Circuit de balayage ligne pour un tube image avec une bobine de déflexion (AS), un condensateur tangentiel (Cs) qui se situe dans le parcours du courant de balayage (ia) et avec balayage symétrique, dans lequel le faisceau d'électrons est dévié pour la reproduction de l'image en alternance du bord gauche au bord droit de l'image et du bord droit au bord gauche de l'image, **caractérisé en ce** qu'une extrémité (d) de la bobine de déflexion (AS) est branchée à la sortie (d) d'un commutateur de tension (S1) actif qui délivre une tension (Ud) approximativement rectangulaire avec une demi-fréquence de lignes et une durée de cycle 1/1 et l'autre extrémité (h) de la bobine de déflexion (AS) est branchée à la sortie (a) d'un amplificateur (V1) et qu'une première variable réglante (Us1). qui est proportionnelle au courant (ia) qui traverse la bobine de déflexion (AS) est appliquée à une entrée de commande (f) de l'amplificateur (V1) et/ou qu'une seconde variable réglante (Us2), obtenue à partir de l'écart entre la tension de sortie (Ud) du commutateur (S1) par rapport à la forme rectangulaire est appliquée de telle manière que le courant (ia) qui traverse la bobine de déflexion (AS) a une allure linéaire et un passage par zéro au milieu de la ligne (t3).

2. Circuit selon la revendication 1, **caractérisé en ce** qu'une résistance (R4) se trouve dans le parcours du courant de balayage (ia), résistance dont les deux extrémités (b. a) sont branchées aux entrées d'un amplificateur différenciateur (V2) dont la sortie donne la variable réglante (Us1).

3. Circuit selon la revendication 2, **caractérisé en ce** qu'un circuit est prévu qui exploite la position dans le temps du passage par zéro (t2, t3) du courant de balayage (ia) par rapport aux flancs (t1, t4) de la tension de sortie (Ud) du commutateur (S1) et qu'une tension de réglage (Ur) pour l'amplification de l'amplificateur différenciateur (V2).

4. Circuit selon la revendication 3, **caractérisé en ce** qu un compteur est mis en marche à un flanc (t1) de la tension de sortie (Ud) du commutateur (S1), que son sens de comptage est inversé au passage par zéro (t2) du courant de balayage (ia) et que le résultat du comptage détermine, au prochain flanc (t4) de la tension de sortie (Ud), la valeur de la tension de réglage (Ur).

5. Circuit selon la revendication 1, **caractérisé en ce** que la tension de fonctionnement (UB) appliquée au commutateur (S1) est modulée en amplitude pour obtenir une correction de la géométrie de la grille de déflexion (E/O).

EP 0 285 114 B1

Fig.1

7

Fig.2